(19) Europäisches Patentamt
European Patent Office
Office européen des brevets

(11) Publication number: **0 080 352**
**B1**

(12) # EUROPEAN PATENT SPECIFICATION

(45) Date of publication of patent specification: **12.11.86**

(51) Int. Cl.⁴: **C 09 B 62/085**, C 09 B 62/51, D 06 P 3/66

(21) Application number: **82306189.0**

(22) Date of filing: **19.11.82**

(54) **Reactive dye.**

(30) Priority: **25.11.81 JP 189755/81**
**24.03.82 JP 47649/82**
**27.03.82 JP 49397/82**
**29.03.82 JP 51519/82**

(43) Date of publication of application:
**01.06.83 Bulletin 83/22**

(45) Publication of the grant of the patent:
**12.11.86 Bulletin 86/46**

(84) Designated Contracting States:
**BE CH DE FR GB IT LI NL SE**

(56) References cited:
**FR-A-2 430 442**

**CHEMICAL ABSTRACTS, vol. 95, no. 8, August 1981, page 73, no. 63672c, Columbus, Ohio, USA**

**CHEMICAL ABSTRACTS, vol. 95, no. 24, December 1981, page 75, no. 205410s, Columbus, Ohio, USA**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Shimidzu, Yasutaka**
**11-3 Kofudai-5-chome**
**Toyonocho Toyono-gun Osaka (JP)**
Inventor: **Harada, Naoki**
**15-22 Nishichujocho**
**Ibaraki-shi (JP)**
Inventor: **Tezuka, Yasuo**
**24-15 Nishimami-1-chome Kashibacho**
**Kitakatsuragi-gun Nara-ken (JP)**

(74) Representative: **Harrison, Michael Robert et al**
**URQUHART-DYKES & LORD 5th Floor**
**Tower House Merrion Way**
**Leeds LS2 8PA West Yorkshire (GB)**

EP 0 080 352 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to novel monazo compounds, a process for producing them and a process for dyeing cellulose fiber by using them.

Dyes having β-sulfatoethylsulfonyl group are known as the so-called vinylsulfone type reactive dye for dyeing fiber materials. However, products dyed with yellow azo reactive dyes of this kind are generally low in chlorine fasteness, so that they often discolour due to chlorine present in city water.

Yellow dyes having monochlorotriazinyl group as a reactive group as also known. For example, the following dyes are disclosed in Published Unexamined Japanese Patent Application No. 13,790/80:

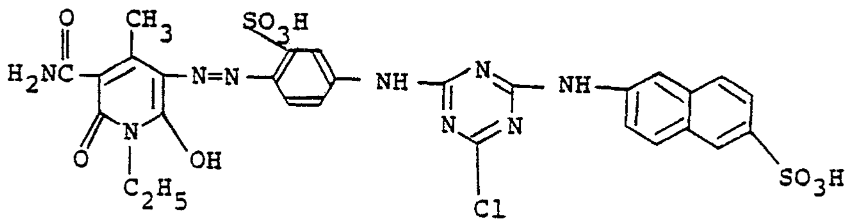

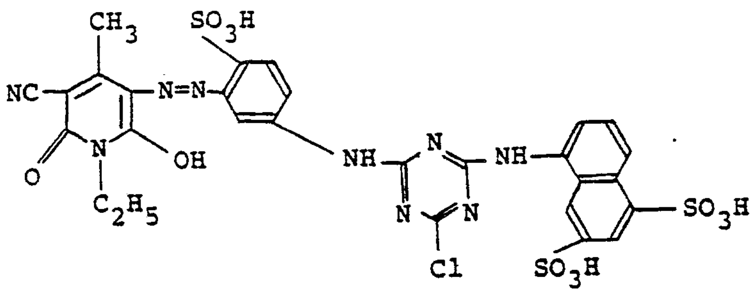

However, these reactive dyes generally require a high dyeing temperature and lack exhaustion dyeing ability, and thus they are used for printing. In addition, dyed products have a fault of low acid stability.

The present inventors ernestly studied to find a yellow vinylsulfone type reactive dye particularly excellent in chlorine fastness and acid stability and superior suitability for exhaustion dyeing, and as a result, it was found that particular monoazo compounds having both the so-called vinylsulfone type reactive group and a mono-chlorotriazinyl group can give a yellow to reddish-yellow dyed product meeting the above requirements.

Thus, this invention provides a monazo compound represented by a free acid of the formula (I):

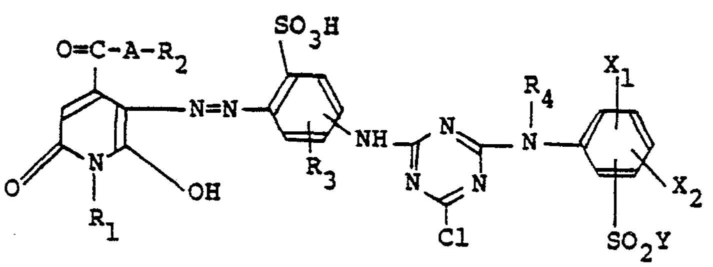

(I)

wherein $R_1$ and $R_2$ independently represent a hydrogen atom, or an unsubstituted or substituted alkyl, aralkyl or a cyclohexyl group; $R_3$ represents a hydrogen atom, or a methyl or sulfonic acid group; $R_4$ represents a hydrogen atom or an unsubstituted or substituted alkyl group; A represents an oxygen atom or —NH— group; $X_1$ and $X_2$ independently represent a hydrogen or chlorine atom, or a methyl, methoxy, carboxyl or sulfonic acid group; and Y represents $—CH=CH_2$ or $—CH_2CH_2Z$ (Z represents a halogen atom, $—OSO_3H$ or $—OPO_3H_2$); and a process for producing the monoazo compound represented by the above formula (I), which comprises (1) condensing an aromatic diamine represented by the formula (II):

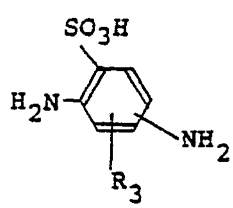

(II)

wherein $R_3$ is as defined above, and an aromatic amine represented by the formula (III):

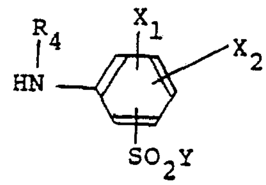

(III)

wherein $R_4$, $X_1$, $X_2$ and Y are as defined above, with cyanuric chloride to obtain an amine compound represented by the formula (IV):

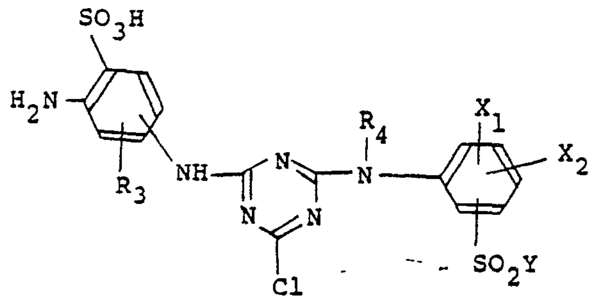

(IV)

wherein $R_3$, $R_4$, $X_1$, $X_2$ and Y are as defined above, diazotizing the amine compound (IV) and then coupling the diazotized product with a pyridone compound represented by the formula (V):

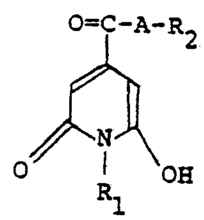

(V)

wherein $R_1$, $R_2$ and A are as defined above, or (2) condensing the aromatic diamine of the formula (II) with cyanuric chloride, diazotizing the resulting condensate, coupling the diazotized product with the pyridone compound of the formula (V) to obtain a monoazo pyridone compound represented by the formula (VI):

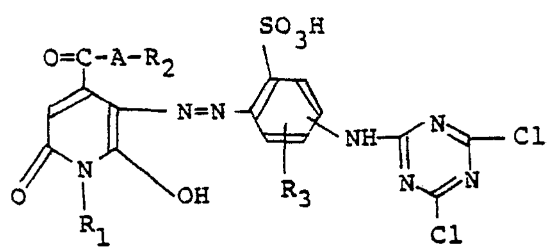

(VI)

wherein $R_1$, $R_2$, $R_3$ and A are as defined above, and then condensing the monoazo compound of the formula (VI) with the aromatic amine of the formula (III).

This invention also provides a process for dyeing cellulose fibers, which comprises using the monoazo compound represented by formula (I).

The monoazo compounds of the invention represented by the formula (I) are excellent in various dye characteristics (high exhaustion yield anf fixation yield, excellent build-up property, etc.) and are useful as a reactive dye giving yellow to reddish yellow dyed product excellent in various fasteners (fastnesses to chlorine, light, perspiration-sunlight, etc.) and excellent in wash-off property.

This invention will be illustrated below in more detail.

The aromatic diamine of the formula (II) usable for the present invention includes;

2,4-diaminobenzenesulfonic acid,

4,6-diaminobenzene-1,3-disulfonic acid,

2,5-diaminobenzenesulfonic acid,

2,4-diamino-5-methylbenzenesulfonic acid.

Regarding the aromatic amine of the formula (III), the alkyl group represented by $R_4$ may be

unsubstituted or substituted, and includes, for example, methyl, ethyl, propyl, butyl, hydoxymethyl, 2-hydroxyethyl, 2-hydroxypropyl, 3-hydroxypropyl, 2-hydroxypropyl, 4-hydroxybutyl, 1-methyl-2-hydroxypropyl, cyanomethyl, cyanoethyl, methoxymethyl, 2-methoxyethyl, 3-methoxypropyl, ethoxymethyl, 2-ethoxyethyl, chloromethyl, 2-chloroethyl, 3-chloropropyl, 4-chlorobutyl, carboxymethyl, 2-carboxyethyl, 2-methoxycarbonylethyl, 2-ethoxycarbonylmethyl, sulfomethyl and 2-sulfoethyl groups.

Examples of

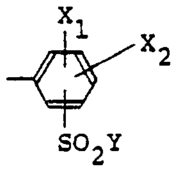

group include

o-, m- or p-(β-sulfoxyethylsulfonyl)-phenyl group,
o-, m- or p-(vinylsulfonyl)-phenyl group,
o-, m- or p-(β-chloroethylsulfonyl)-phenyl group,
o-, m- or p-(phosphoxyethylsulfonyl)-phenyl group,
4-methoxy-3-(β-sulfoxyethylvinyl, β-chloroethyl or β-phosphoxyethylsulfonyl)-phenyl group,
2-methoxy-5-(β-sulfoxyethyl, vinyl, β-chloroethyl or β-phosphoxyethylsulfonyl)-phenyl group,
2-methoxy-5-methyl-4-(β-sulfoxyethyl, vinyl, β-chloroethyl or β-phosphoxyethylsulfonyl)-phenyl group,
2,5-dimethoxy-4-(β-sulfoxyethyl, vinyl, β-chlorethyl or β-phosphoxyethylsulfonyl)-phenyl group,
2-carboxy-5-(β-sulfoxyethyl, vinyl, β-chlorethyl or β-phosphoxyethylsulfonyl)-phenyl group,
2-chloro-4-(β-sulfoxyethyl, vinyl, β-chlorethyl or β-phosphoxyethylsulfonyl)-phenyl group.

Regarding the pyridone compound of the formula (V), the alkyl and aralkyl group represented by $R_1$ and $R_2$ may be unsubstituted or substituted. Examples of said alkyl group include straight or branched chain unsubstituted alkyl groups such as methyl, ethyl, propyl, butyl, amyl, hexyl, octyl, nonyl, dodecyl; hydroxyalkyl groups such as hydroxyethyl, hydroxypropyl; and alkoxyalkyl groups such as alkoxyethyl groups (for example, methoxyethyl, ethoxyethyl, butoxyethyl, etc.). Examples of said aralkyl group include benzyl group, p-methyl- or p-ethyl-benzyl group, m-methyl- or m-ethyl-benzyl group, p-methoxy- or p-ethoxy-benzyl group, m-methoxy- or m-ethoxy-benzyl group, p-dimiethylamino- or p-diethylamino-benzyl group, phenethyl group, and p-methyl-, p-ethyl-, p-methoxy- or p-ethoxy-phenethyl group.

The pyridone compound of the formula (V) can be produced either by alkylating citrazinic acid with an alkylating agent, if necessary followed by esterification or amidation, or by subjecting a citric triester or an aconitic triester and an amine derivative to cyclizing condensation reaction.

The monoazo compound represented by the formula (I) may be produced in the following manner.

The aromatic diamine of the formula (II) is condensed with cyanuric chloride in an aqueous medium, in the presence of a nonionic surfactant and at a temperature of −10°C to +20°C (preferably 0°C to +10°C) while adjusting pH to 1—5 (preferably 2—4). Then, the condensation product is condensed with the aromatic amine of the formula (III) at a temperature of 10°C to 60°C (preferably 30°C to 50°C) at a pH of 4—7 (preferably 5—6). Thus, the amine compound of the formula (IV) is obtained.

The amine compound of the formula (IV) can be also obtained by condensing the aromatic amine of the formula (III) with cyanuric chloride in the same manner as above and then condensing the condensation product with the aromatic diamine of the formula (II) in the same manner as above.

The amine compound (IV) thus obtained is then diazotized in a usual manner, for example, by using a small excessive amount of sodium nitrate at a temperature of −10°C to +30°C (preferably −5°C to +10°C). Then, the diazotized product is coupled with the pyridone compound of the formula (V) at a temperature of −10°C to +50°C (preferably 0°C to +20°C) while adjusting pH to 4—7 (preferably 5—6), whereby the monoazo compound of the formula (I) is obtained.

Alternatively, it is also possible to obtain the monoazo compound of the formula (I) in the following manner. The condensation product of the aromatic diamine of the formula (II) and cyanuric chloride obtained in the same manner as above is diazotized in a usual manner, for example, by using a small excessive amount of sodium nitrite at a temperature of −10°C to +20°C (preferably −5°C to +10°C). Then, the diazotized product is coupled with the pyridone compound of the formula (V) at a temperature of −10°C to +40°C (preferably −5°C to +20°C) while adjusting pH to 4—9 (preferably 5—7) to obtain the monoazo pyridone compound of the formula (VI). The monoazo pyridone compound is then condensed with the aromatic amine of the formula (III) at a temperature of 10°C to 70°C (preferably 30°C to 50°C) at pH 4—7 (preferably 16 at pH 5—6) to obtain the monoazo compound of the formula (I).

As the monoazo compound obtainable in the above-mentioned manner, the following compounds represented by the formulas, in which

—CY— means 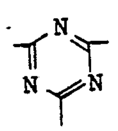 can be exemplified.

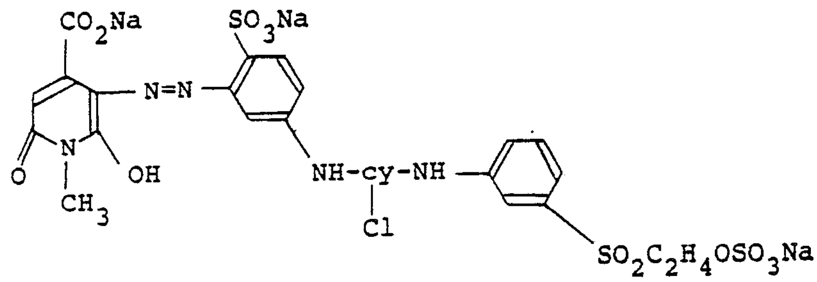

(1)

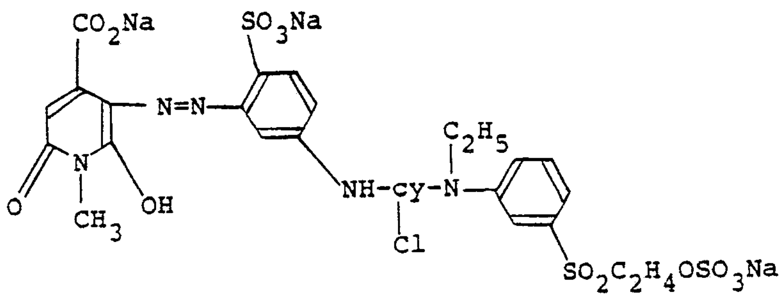

(2)

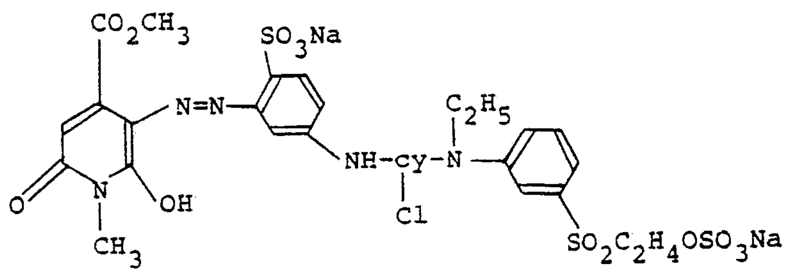

(3)

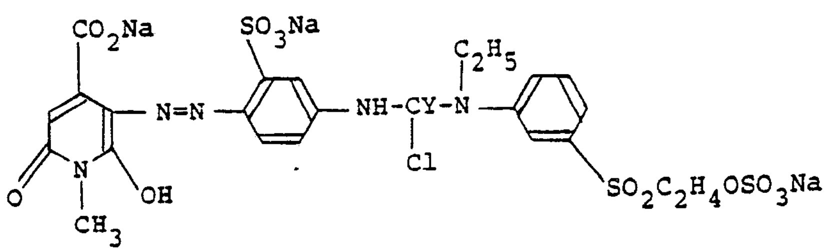

(4)

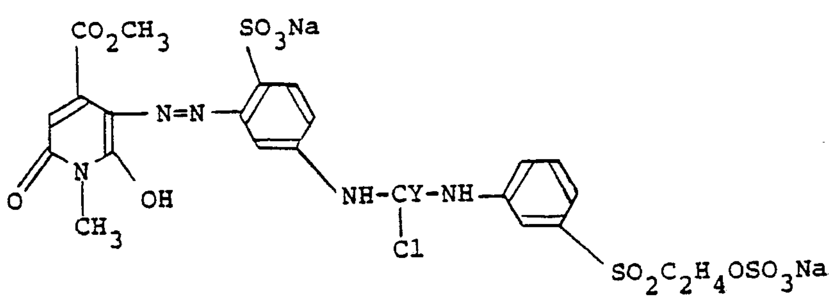

(5)

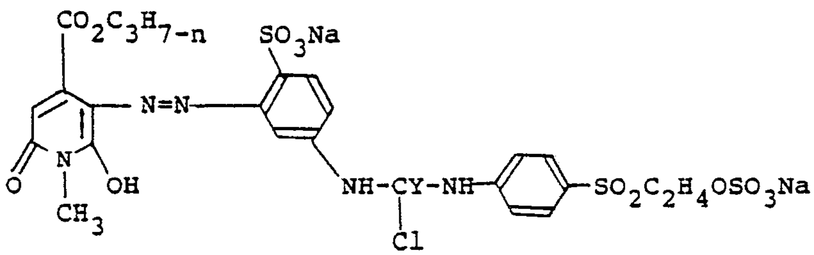

(6)

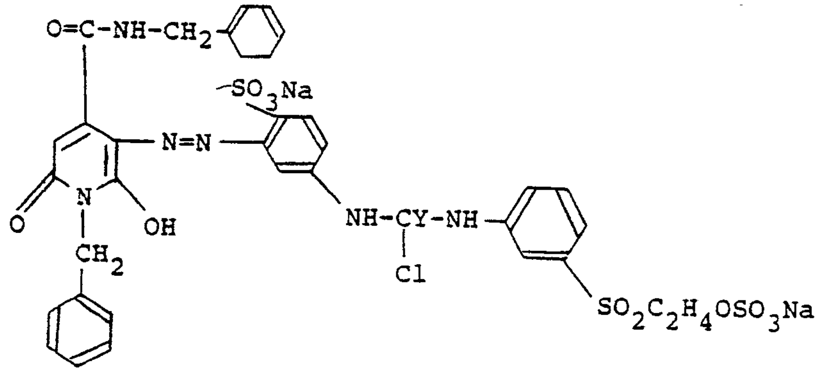

(7)

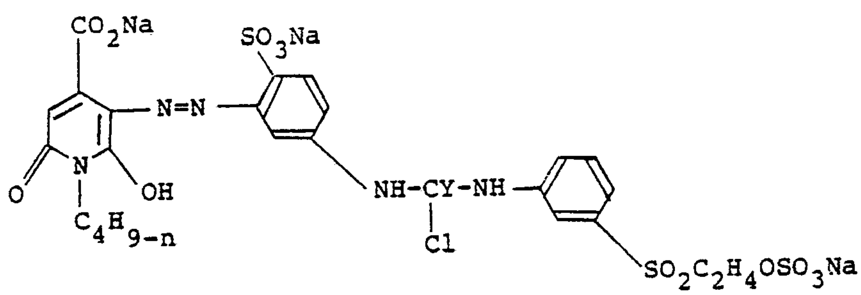

(8)

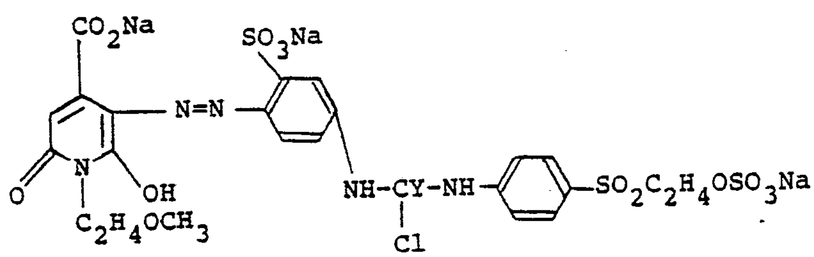

(9)

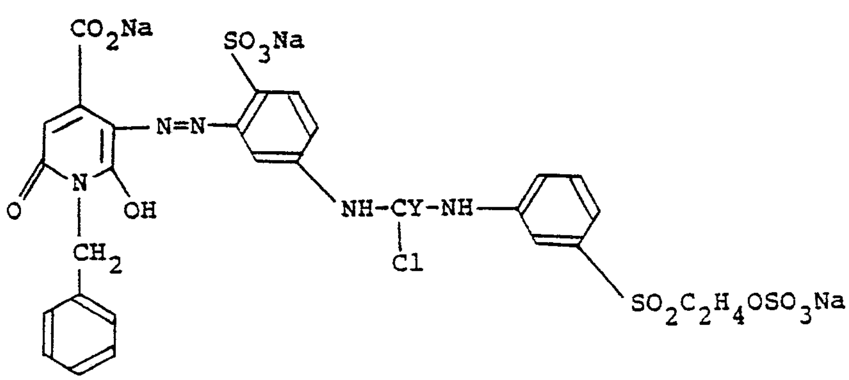

(10)

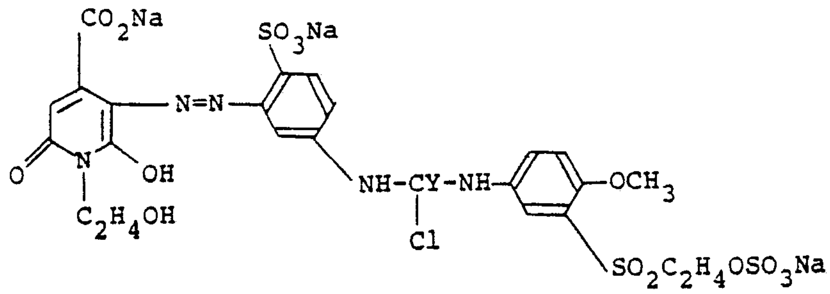

(11)

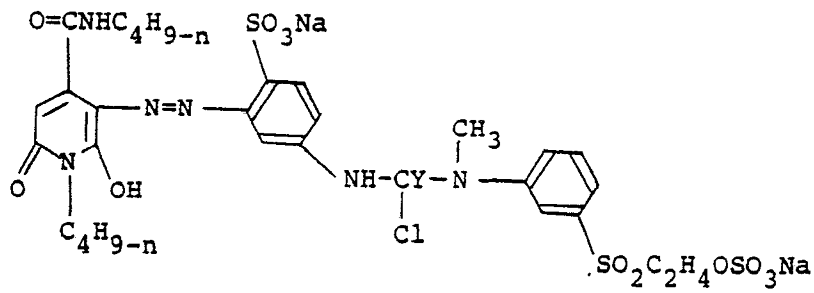

(12)

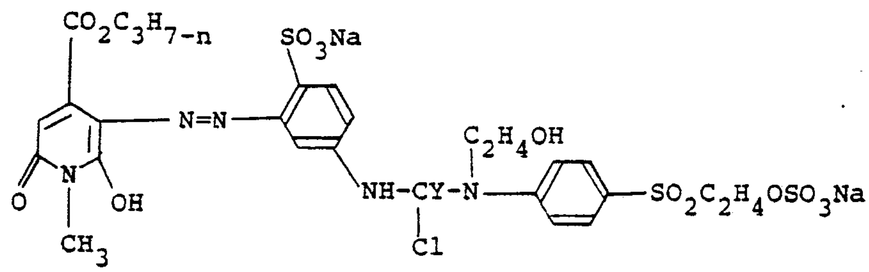

(13)

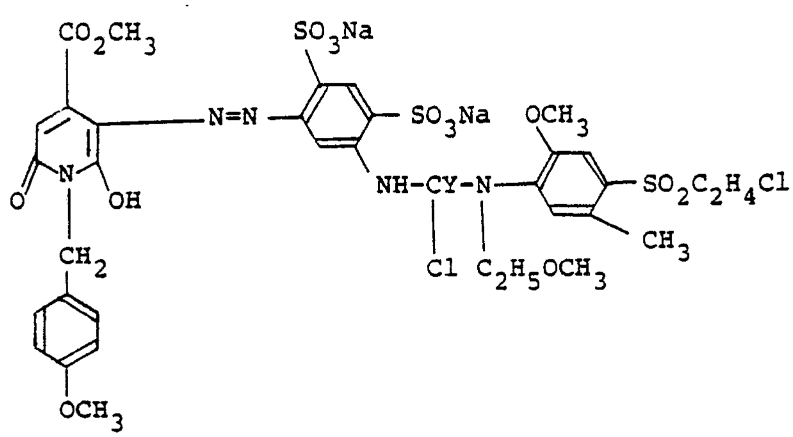

(14)

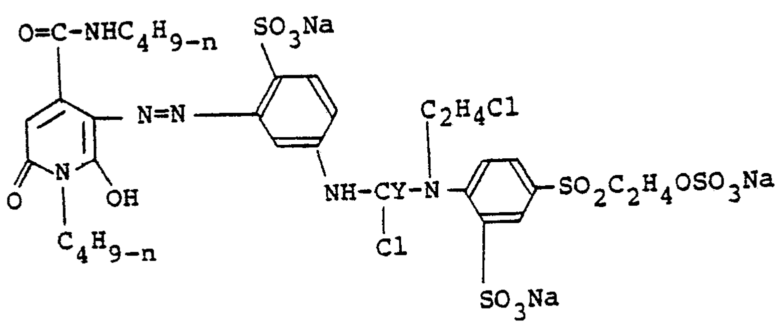

(15)

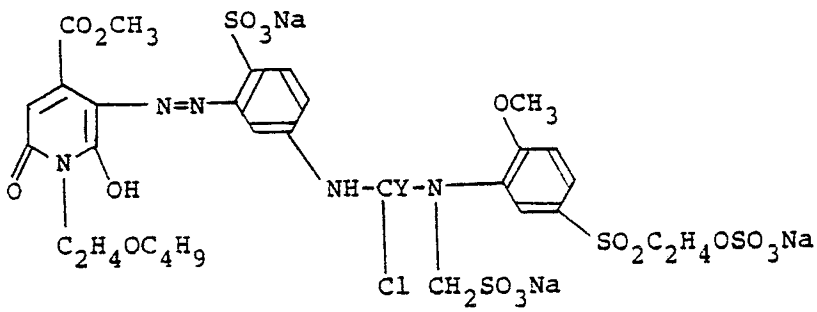

(16)

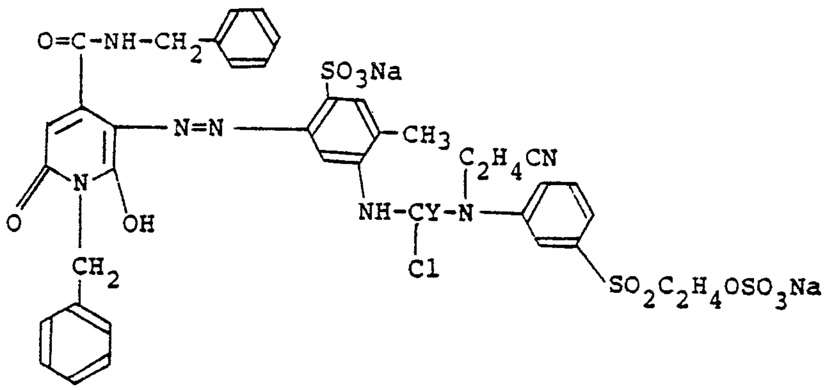

(17)

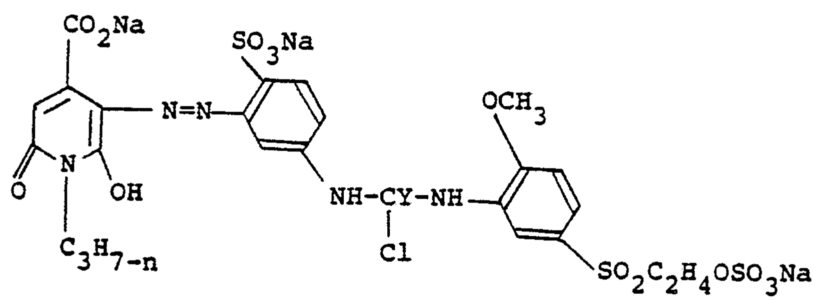

(18)

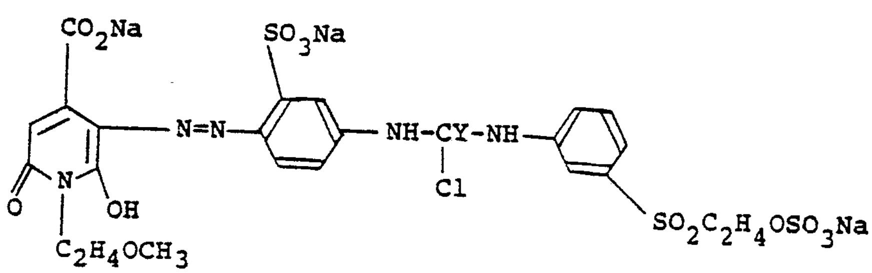

(19)

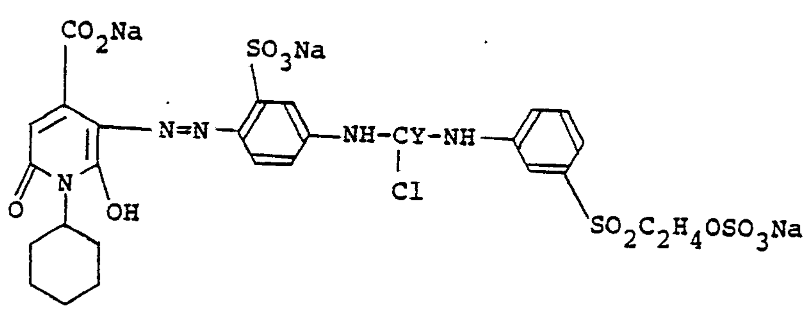

(20)

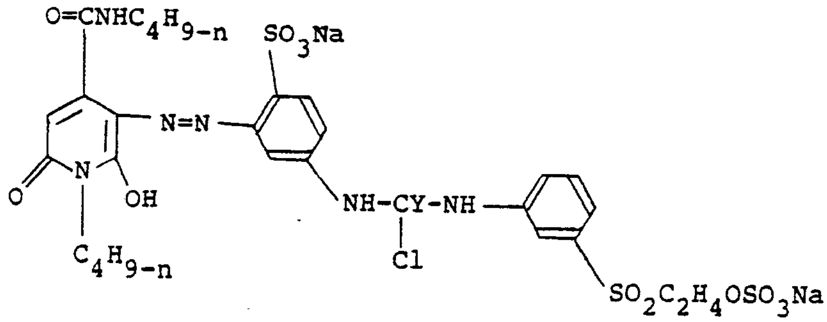

(21)

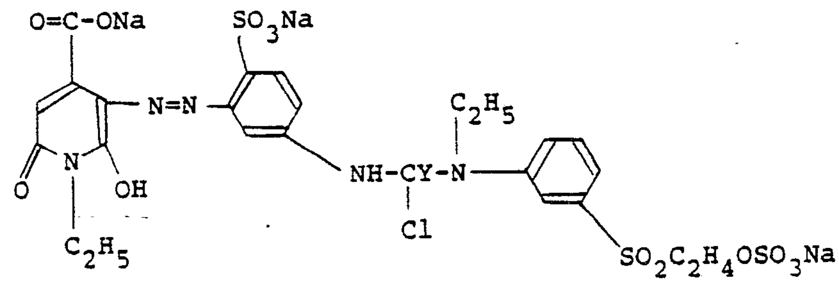

(22)

The monoazo compounds of this invention represented by the above formula (I) can be used for dyeing cellulose fibers yellow to reddish yellow by a usual dyeing processes, such as exhaustion dyeing, printing, continuous dyeing including cold pad patch up process.

Cellulose fibers to be dyes include natural and regenerated cellulose fibers such as cotton, flax, viscose rayon, viscose staple fiber.

In the exhaustion dyeing, it can be carried out in a dyeing bath containing sodium sulfate or sodium chloride and an acid-bonding agent such as sodium carbonate, trisodium phosphate, sodium hydroxide at a relatively low temperature. In the printing, it can be carried out by, for example, printing a color paste comprising area, an acid-bonding agent such as sodium bicarbonate, sodium carbonate, trisodium phosphate, sodium hydroxide, and a paste (preferably sodium alginate), to the fiber, predrying and then heating or steaming at a temperature of 100—200°C.

The monoazo compound of this invention can give dyed products excellent particularly in chlorine fastness (3—4th to 4th grade). Because of the use of chlorine bleaching agent having become popular in washing at home, the monoazo compound of this invention excellent in chlorine fastness is of high value. Further, the monoazo compound of this invention excellent in fastnesses to light, perspiration-sunlight is suitable for dyeing outdoor wears such as sports wear.

Further, the monoazo compounds of this invention show a high exhaustion yield and a high fixation yield in the exhaustion dyeing, and therefore they can give a dyed product having a color of deep hue. In addition, they are excellent in wash-off property, so that the unfixed dye can readily be removed.

The monoazo compounds of this invention have a unique property such that in exhaustion dyeing they are unsusceptible to changes in dyeing temperature, alkaline agent, the amount of inorganic salt and bath ratio, so that they can dye the fiber with a very high reproducibility.

This invention will be illustrated with reference to the following examples, wherein parts are by weight.

Example 1 (Compound No. 1)

9.2 Parts of cyanuric chloride was dispersed in a solution of 0.1 part of nonionic surfactant in 100 parts of water at 0—10°C. To the dispersion, a solution of 10.5 parts of sodium 2,4-diaminobenzenesulfonate in 100 parts of water was added dropwise over a time period of 1 hour at 0—5°C while maintaining pH at 2—3, and then the resulting mixture was stirred for about 2 hours.

Subsequently, 16.9 parts of 1-aminobenzene-3-β-sulfatoethylsulfone was added. The resulting mixture was heated to 30—40°C while adjusting its pH to 5—6 with aqueous solution of sodium carbonate, and then it was stirred at that temperature for 5 hours.

In the resulting reaction mixture was dissolved 3.5 parts of sodium nitrate, and 13 parts of concentrated hydrochloric acid was added thereto at 0—5°C to perform diazotization. Subsequently, the diazonium liquor was added to a solution prepared by dissolving 8.5 parts of 1-methyl-6-hydroxy-4-hydroxycarbonyl-2-pyridone in 100 parts of water, and adjusting pH of the resulting solution to 5—6 with aqueous solution of sodium hydroxide, while maintaining pH at 5—6.

Then, 100 parts of sodium chloride was added to the reaction mixture to precipitate a crystalline product. It was filtered with suction, washed and dried at 60°C to obtain 51.3 parts of a dye having the following formula:

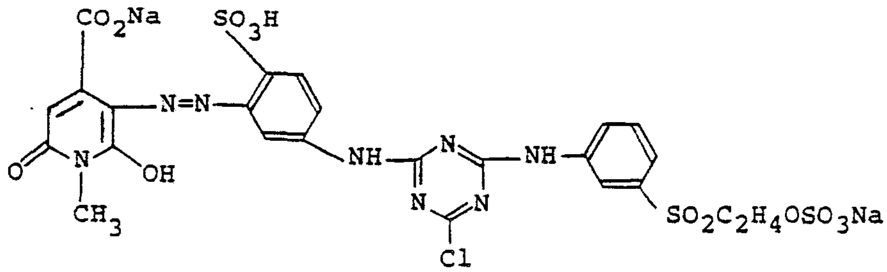

(λmax 420 nm)

Example 2 (Compound No. 3)

9.2 Parts of cyanuric chloride was dispersed in a solution of 0.1 part of nonionic surfactant in 100 parts of water at 0 to 10°C. To the dispersion, a solution of 10.5 parts of sodium 2,4-diaminobenzenesulfonate in 100 parts of water was added dropwise at 0—5°C over a time period of 1 hour while maintaining pH at 2—3, and then the resulting mixture was stirred for about 2 hours. The mixture was adjusted to pH 7—8 by adding 20% aqueous solution of sodium carbonate, and then 3.5 parts of sodium nitrate was added and dissolved therein. Thereafter 12.7 parts of concentrated hydrochloric acid was added thereinto to carry out diazotization. The resulting diazonium liquor was added to a suspension prepared by suspending 9.3 parts of 1-methyl-6-hydroxy-4-methoxycarbonyl-2-pyridone into 100 parts of water and adjusting pH to 5—6 with aqueous solution of sodium hydroxide, and then 5 parts of sodium bicarbonate was added thereto.

To this reaction mixture was added 18.4 parts of 1-N-ethylaminobenzene-3-β-sulfatoethylsulfone. The resulting mixture was heated to 30—40°C while adjusting its pH to 5—6, and stirred at that temperature for 5 hours. Then, 100 parts of sodium chloride was added to precipitate a crystalline product, and it was filtered with suction, washed and dried at 60°C to obtain 51.7 parts of a dye having the following formula:

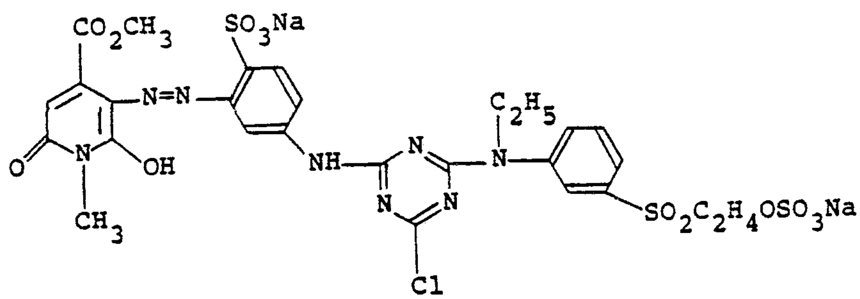

(λmax 420 nm)

Example 3 (Compound No. 5)

9.2 Parts of cyanuric chloride was dispersed in a solution of 0.1 part of nonionic surfactant in 100 parts of water at 0 to 10°C. Into the resulting dispersion, a solution of 10.5 parts of sodium 2,4-diaminobenzenesulfonate in 100 parts of water was added dropwise at 0—5°C over a time period of 1 hour while maintaining pH at 2—3, and then the mixture was stirred for about 2 hours. The mixture was adjusted to pH 7—8 by adding 20% aqueous solution of sodium carbonate and then 3.5 parts of sodium nitrite was added and dissolved therein. Thereafter 12.7 parts of concentrated hydrochloric acid was added thereinto at 0—5°C to carry out diazotization. The resulting diazonium liquor was added to a suspension prepared by suspending 9.3 parts of 1-methyl-6-hydroxy-4-methoxycarbonyl-2-pyridone into 100 parts of water and adjusting pH value to 5—6 with aqueous solution of sodium hydroxide, and then 5 parts of sodium bicarbonate was added thereto.

To this reaction mixture was added 16.9 parts of 1-aminobenzene-3-β-sulfatsethylsulfone, and the resulting mixture was heated to 30—40°C while adjusting its pH to 5—6, and stirred at that temperature for 5 hours. Then, 100 parts of sodium chloride was added to precipitate a crystalline product, and it was filtered with suction, washed and dried at 60°C to obtain 50.2 parts of a dye having the following formula:

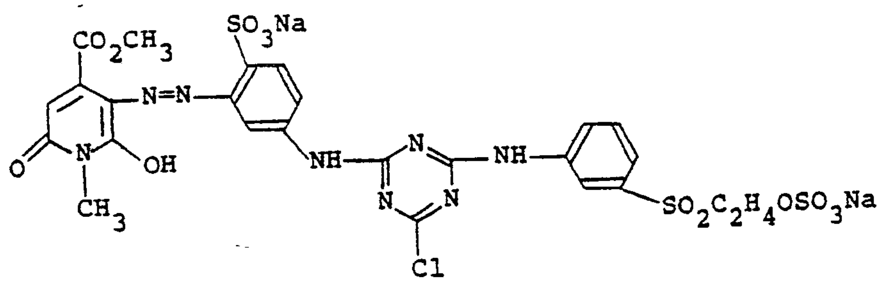

(λmax 420 nm)

Example 4 (Compound No. 20)

9.2 Parts of cyanuric chloride was dispersed in a solution of 0.1 part of nonionic surfactant in 100 parts of a water at 0 to 10°C. Into the dispersion, a solution of 10.5 parts of sodium 2,5-diaminobenzenesulfonate in 100 parts of water was added dropwise at 0—5°C over a time period of 1 hour while maintaining pH at 2—3, and then the resulting mixture was stirred for about 2 hours. The mixture was adjusted to pH 7—8 by adding 20% aqueous solution of sodium carbonate and then 3.5 parts of sodium nitrate was added and dissolved therein. Thereafter 12.7 parts of concentrated hydrochloric acid was added thereinto at 0—5°C to carry out diazotization. The resulting diazonium liquor was added to a suspension prepared by suspending 11.9 parts of 1-cyclohexyl-6-hydroxy-4-hydroxycarbonyl-2-pyridone into 100 parts of water and adjusting its pH to 5—6 with aqueous solution of sodium hydroxide, and 5 parts of sodium bicarbonate was added thereto.

To this reaction mixture was added 16.9 parts of 1-aminobenzene-3-β-sulfatoethylsulfone sulfate, and the resulting mixture was heated to 30—40°C while adjusting pH to 5—6 and stirred at that temperature for 5 hours. Then, 75 parts of sodium chloride was added to precipitate a crystalline product, and it was filtered with suction, washed and dried at 60°C to obtain 49.7 parts of a dye having the following formula;

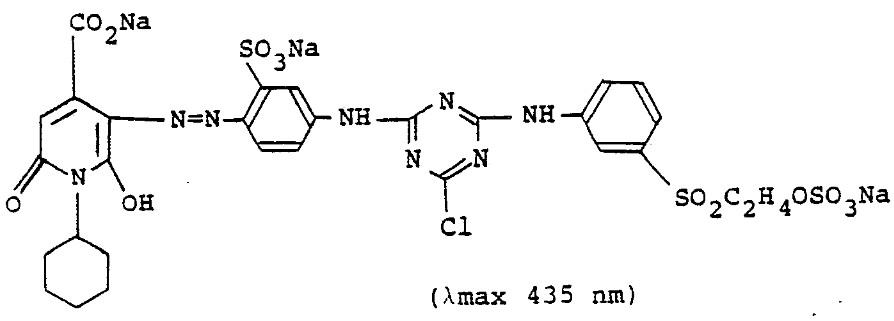

(λmax 435 nm)

Example 5

0.3 Part of the dye of Compound No. 1 was dissolved in 200 parts of water, and 20 parts of sodium sulfate and 10 parts of cotton were added in this order, and the bath was heated to 50°C. 30 minutes thereafter, 4 parts of sodium carbonate was added, and dyeing was continued at that temperature for 1 hour. After completion of the dyeing, the cotton was washed with water and soaped to obtain a yellow dyed product excellent in fastnesses, particularly in chlorine fastness.

Example 6

0.3 Part of the dye of Compound No. 3 was dissolved in 200 parts of water, and 20 parts of sodium sulfate and 10 parts of cotton were added in this order, and the bath was heated to 40°C. 20 minutes thereafter, 3 parts of trisodium phosphate was added, and dyeing was continued at that temperature for 1 hour. After completion of dyeing, the cotton was washed with water and soaped to obtain a yellow colored dyed product excellent in fastnesses, particularly in chlorine fastness.

Example 7

Color paste composition:

| | |
|---|---|
| Dye of Compound No. 1 | 5 parts |
| Urea | 5 parts |
| Raw paste containing 5% of sodium alginate | 50 parts |
| Hot water | 25 parts |
| Sodium bicarbonate | 2 parts |
| Balance | 13 parts |

The color paste having the above composition was printed on a mercerized cotton broad cloth. After predrying, the cloth was steamed at 100°C for 5 minutes, and thereafter washed with hot water, soaped, washed with hot water and then dried.

Thus, a yellow printed product excellent in chlorine fastness was obtained.

Example 8

Thirty parts of the dye of Compound No. 3 was dissolved in 925 parts of hot water and then the solution was cooled to room temperature (about 20°C). To this solution were added 15 parts of 32.5% aqueous solution of sodium hydroxide and 30 parts of sodium sulfate to prepare a dye liquor. A cellulose fabric was dipped in this liquor, squeezed up to a pick-up 65% by a known method to carry out a padding. After winding up, the padded cellulose fabric was tightly wrapped with polyethylene film and allowed to stand for 20 hours at room temperature (about 20°C). Subsequently, the cellulose fabric was washed with cold water and then with hot water, soaped in a boiling detergent solution, again washed with cold water and then dried. Thus, a dyed produc thaving a very deep yellow color and free from unevenness in color was obtained.

**Claims**

1. A monoazo compound represented by a free acid of the formula,

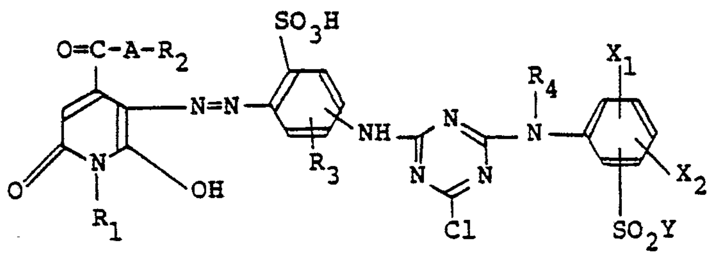

wherein $R_1$ and $R_2$ independently represent a hydrogen atom or an unsubstituted or substituted alkyl, aralkyl or a cyclohexyl group; $R_3$ represents a hydrogen atom or a methyl or sulfonic acid group; $R_4$ represents a hydrogen atom or an unsubstituted or substituted alkyl group; A represents an oxygen atom or —NH—; $X_1$ and $X_2$ independently represent a hydrogen or chlorine atom, or a methyl, methoxy, carboxyl or sulfonic acid group; and Y represents $-CH=CH_2$ or $-CH_2CH_2Z$ (Z represents a halogen atom, $-OSO_3H$ or $-OPO_3H_2$).

2. The compound according to Claim 1, wherein $R_3$ is a hydrogen atom.

3. The compound according to Claim 1, wherein $R_4$ is a hydrogen atom or a $C_1$—$C_3$ alkyl, 2-carboxyethyl, 2-carbamoylethyl or 2-hydroxyethyl group.

4. A monoazo compound represented by a free acid of the formula,

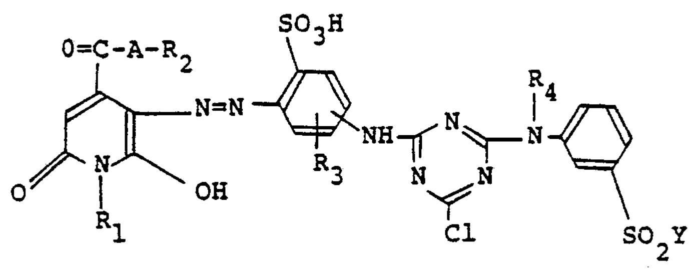

wherein $R_1$ and $R_2$ independently represent a hydogen atom or an alkyl, aralkyl or cyclohexyl group; $R_3$ represents a hydrogen atom or a methyl or sulfonic acid group; $R_4$ represents a hydrogen atom or an alkyl group; A represents an oxygen atom or —NH—; and Y represents $-CH=CH_2$ or $-CH_2CH_2Z$ (Z represents a halogen atom, $-OSO_3H$ or $-OPO_3H_2$).

5. The compound according to Claim 4, wherein $R_5$ is a hydrogen atom.

6. The compound according to Claim 5, wherein $R_4$ is a hydrogen atom or a $C_1$—$C_3$ alkyl, 2-carboxylethyl, 2-carbamoylethyl or 2-hydroxyethyl group.

7. A process for producing a monoazo compound represented by a free acid of the formula (I),

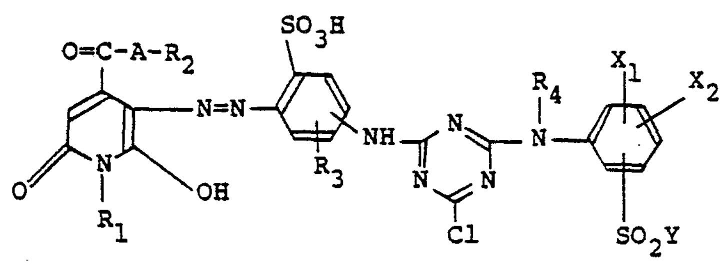 (I)

wherein $R_1$ and $R_2$ independently represent a hydrogen atom, or an alkyl, aralkyl or cyclohexyl group; $R_3$ represents a hydrogen atom or a methyl or sulfonic acid group; $R_4$ represents a hydrogen atom or an alkyl

group; A represents an oxygen atom or —NH—; $X_1$ and $X_2$ independently represent a hydrogen or chlorine atom, or a methyl, methoxy, carboxyl or sulfonic acid group; and Y represents $—CH=CH_2$ or $—CH_2CH_2Z$ (Z represents a halogen atom, $—OSO_3H$ or $—OPO_3H_2$), which comprises (1) condensing an aromatic diamine represents by the formula (II),

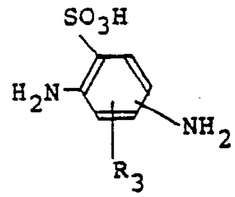

(II)

wherein $R_3$ is as defined above, an aromatic amine represented by the formula (III),

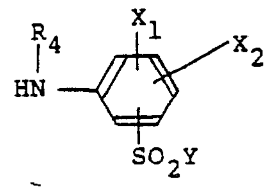

(III)

wherein $R_4$, $X_1$, $X_2$ and Y are as defined above, with cyanuric chloride to obtain an amine compound represented by the formula (IV),

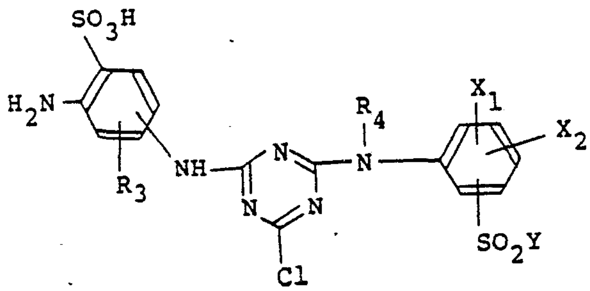

(IV)

wherein $R_3$, $R_4$, $X_1$, $X_2$ and Y are as defined above, diazotizing the amine compound (IV) thus obtained and coupling the diazotized product with a pyridone compound represented by the following general formula (V),

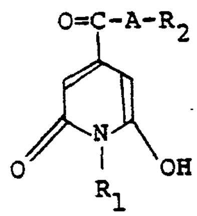

(V)

wherein $R_1$, $R_2$ and A are as defined above, or (2) condensing the aromatic diamine represented by the formula (II) with cyanuric chloride, diazotizing the condensate, coupling the diazotized product with the pyridone compound represented by the formula (V) to obtain a monoazo pyridone compound represented by the formula (VI),

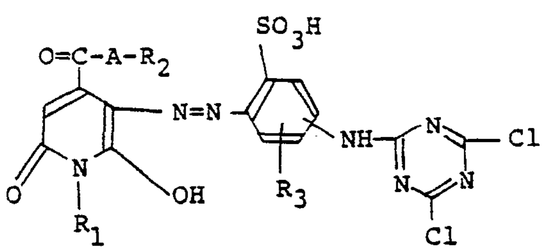

(VI)

wherein $R_1$, $R_2$, $R_3$ and A are as defined above, an then condensing the monoazo compound (VI) with the aromatic amine represented by the formula (III).

8. A process for dyeing cellulose fibers, which comprises using a monoazo compound represented by a free acid of the formula,

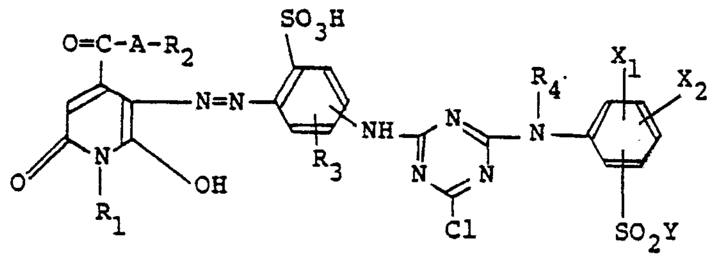

wherein $R_1$ and $R_2$ independently represent a hydrogen atom, or an alkyl, aralkyl or cyclohexyl group; $R_3$ represents a hydrogen atom or a methyl or sulfonic acid group; $R_4$ represents a hydrogen atom or an alkyl group; A represents an oxygen atom or —NH—; $X_1$ and $X_2$ independently represent a hydrogen or chlorine atom, or a methyl, methoxy, carboxyl or sulfonic acid group; and Y represents —CH=$CH_2$ or —$CH_2CH_2Z$ (Z represents a halogen atom, —$OSO_3H$ or —$OPO_3H_2$).

**Patentansprüche**

1. Monoazoverbindung in Form einer freien Säure der Formel;

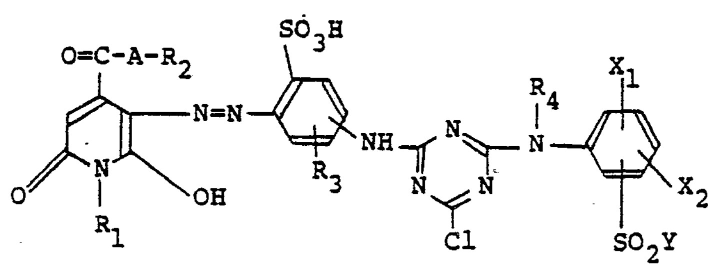

worin bedeuten: $R_1$ und $R_2$ jeweils ein Wasserstoffatom oder einen ggf. substituierten Alkyl-, Aralkyl- oder Cyclohexylrest; $R_3$ ein Wasserstoffatom oder einen Methyl- oder Sulfonsäurerest; $R_4$ ein Wasserstoffatom oder einen ggf. substituierten Alkylrest; A ein Sauerstoffatom oder —NH—; $X_1$ und $X_2$ jeweils ein Wasserstoff- oder Chloratom oder einen Methyl-, Methoxy-, Carboxyl- oder Sulfonsäurerest und Y —CH=$CH_2$ oder —$CH_2CH_2Z$ mit Z gleich einem Halogenatom, —$OSO_3H$ oder —$OPO_3H_2$.

2. Verbindung nach Anpruch 1, dadurch gekennzeichnet, daß $R_3$ für ein Wasserstoffatom steht.

3. Verbindung nach Anspruch 1, dadurch gekennzeichnet, daß $R_4$ für ein Wasserstoffatom oder einen $C_1$—$C_3$-Alkyl-, 2-Carboxylethyl-, 2-Carbamoylethyl- oder 2-Hydroxyethylrest steht.

4. Monoazaverbindung in Form einer freien Säure der Formel;

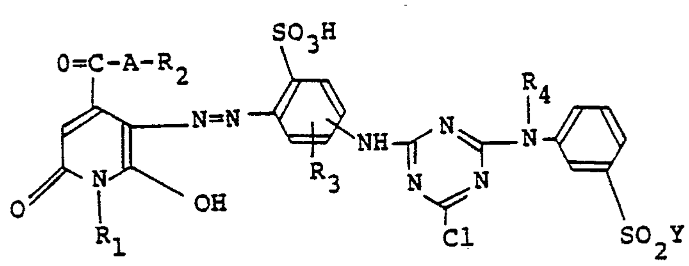

worin bedeuten: $R_1$ und $R_2$ jeweils ein Wasserstoffatom oder einen Alkyl-, Aralkyl- oder Cyclohexylrest; $R_3$ ein Wasserstoffatom oder einen Methyl- oder Sulfonsäurerest; $R_4$ ein Wasserstoffatom oder einen Alkylrest; A ein Sauerstoffatom oder —NH— und Y —CH=$CH_2$ oder —$CH_2CH_2Z$ mit Z gleich einem Halogenatom, —$OSO_3H$ oder —$OPO_3H_2$.

5. Verbindung nach Anspruch 4, dadurch gekennzeichnet, daß $R_3$ für ein Wasserstoffatom steht.

6. Verbindung nach Anspruch 5, dadurch gekennzeichnet, daß $R_4$ für ein Wasserstoffatom oder einen $C_1$—$C_3$-Alkyl-, 2-Carboxyethyl-, 2-Carbamoylethyl- oder 2-Hydroxyethylrest steht.

7. Verfahren zur Herstellung einer Monoazoverbindung in Form einer freien Säure der Formel;

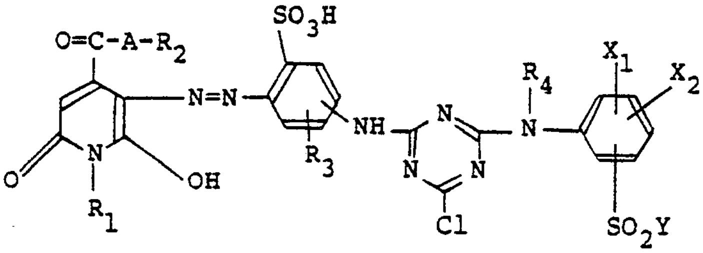

(I)

worin bedeuten; $R_1$ und $R_2$ jeweils ein Wasserstoffatom oder einen Alkyl-, Aralkyl- oder Cyclohexylrest; $R_3$ ein Wasserstoffatom oder einen Methyl- oder Sulfonsäurerest; $R_4$ ein Wasserstoffatom oder einen Alkylrest; A ein Sauerstoffatom oder —NH—; $X_1$ und $X_2$ jeweils ein Wassserstoff- oder Chloratom oder einen Methyl-, Methoxy-, Carboxyl- oder Sulfonsäurerest und Y $—CH=CH_2$ oder $—CH_2CH_2Z$ mit Z gleich einem Halogenatom, $—OSO_3H$ oder $—OPO_3H_2$, dadurch gekennzeichnet, daß man (1) ein aromatisches Diamin der Formel:

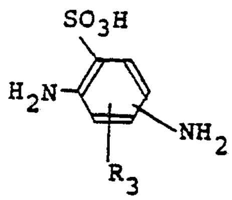

(II)

in welcher $R_3$ die angegebene Bedeutung besitzt, und ein aromatisches Amin der Formel:

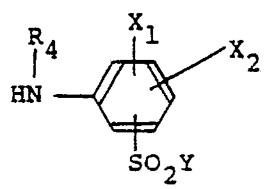

(III)

in welcher $R_4$, $X_1$, $X_3$ und Y die angegebene Bedeutung besitzen, mit Cyanurchlorid zu einer Aminverbindung der Formel:

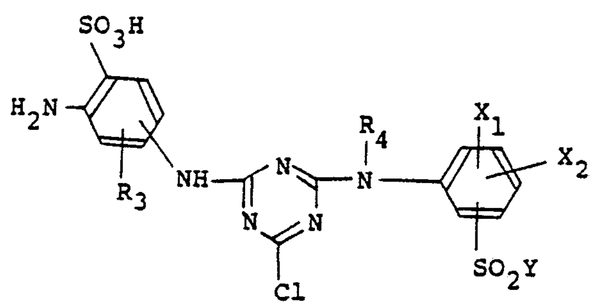

(IV)

in welcher $R_3$, $R_4$, $X_1$, $X_2$ und Y die angegebene Bedeutung besitzen, kondensiert, die erhaltene Aminverbindung der Formel (IV) diazotiert und das Diazotierungsprodukt mit einer Pyridonverbindung der allgemeinen Formel:

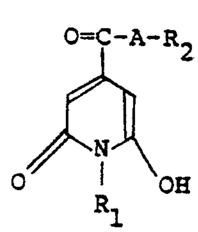

(V)

in welcher $R_1$, $R_2$ und A die angegebene Bedeutung besitzen, kuppelt, oder (2) das aromatische Diamin der Formel (II) mit Cyanurchlorid kondensiert, das Kondensat diazotiert, das Diazotierungsprodukt mit einer Pyridonverbindung der Formel (V) zu einer Monoazopyridonverbindung der Formel:

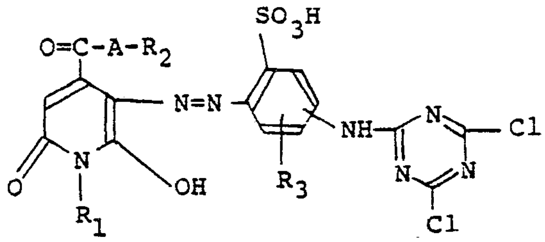

(VI)

in welcher $R_1$, $R_2$, $R_3$ und A die angegebene Bedeutung besitzen, kuppelt und sodann die Monoazoverbindung der Formel (VI) mit dem aromatischen Amin der Formel (III) kondensiert.

8. Verfahren zum Anfärben von Cellulosefasern mittels einer Monoazoverbindung in Form einer freien Säure der Formel

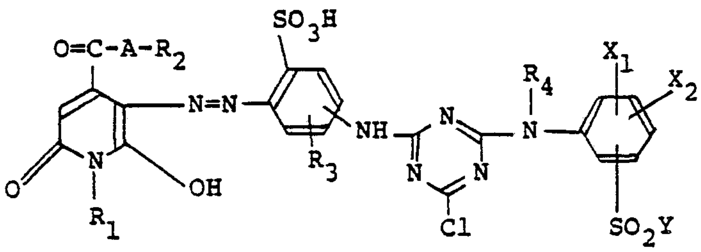

worin bedeuten: $R_1$ und $R_2$ jeweils ein Wasserstoffatom oder einen Alkyl-, Aralkyl- oder Cyclohexyrest; $R_3$ ein Wasserstoffatom oder einen Methyl- oder Sulfonsäurerest; $R_4$ ein Wasserstoffatom oder einen Alkylrest; A ein Sauerstoffatom oder —NH—; $X_1$ und $X_2$ jeweils ein Wasserstoff- oder Chloratom oder einen Methyl-, Methoxy-, Carboxyl- oder Sulfonsäurerest und Y $—CH{=}CH_2$ oder $—CH_2CH_2Z$ mit Z gleich einem Halogenatom, $—OSO_3H$ oder $—OPO_3H_2$.

**Revendications**

1. Composé mono-azoïque représenté par un acide libre de formule

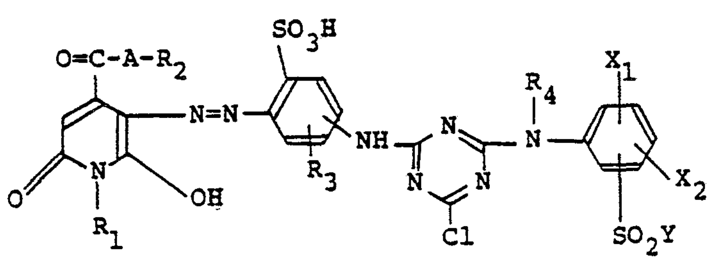

dans laquelle $R_1$ et $R_2$ représentent, indépendamment l'un de l'autre, un atome d'hydrogène, un groupement alkyle ou aralkyle insubstitué ou substitué ou un groupement cyclohexyle; $R_3$ représente un atome d'hydrogène ou un groupement méthyle ou acide sulfonique; $R_4$ représente un atome d'hydrogène ou un groupement alkyle insubstitué ou substitué; A représente un atome d'oxygène ou —NH—; $X_1$ et $X_2$ représentent, indépendamment l'un de l'autre, un atome d'hydrogène ou de chlore ou un groupement méthyle, méthoxy, carbonyle ou acide sulfonique; et Y représente $—CH{=}CH_2$ ou $—CH_2CH_2Z$ (Z représentant un atome d'halogène, $—OSO_3H$ ou $—OPO_3H_2$).

2. Composé selon la revendication 1, dans lequel $R_3$ est un atome d'hydrogène.

3. Composé selon la revendication 1, dans lequel $R_4$ est un atome d'hydrogène ou un groupement alkyle en $C_1—C_3$, 2-carboxyéthyle, 2-carbamoyléthyle ou 2-hydroxyéthyle.

4. Composé mono-azoïque représenté par un acide libre de formule

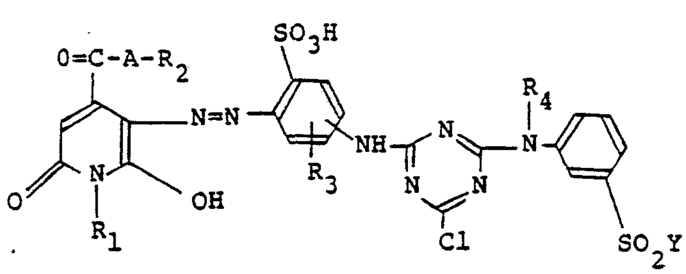

dans laquelle $R_1$ et $R_2$ représentent, indépendamment l'un de l'autre, un atome d'hydrogène ou un groupement alkyle, aralkyle ou cyclohexyle; $R_3$ représente un atome d'hydrogène ou un groupement méthyle ou acide sulfonique; $R_4$ représente un atome d'hydrogène ou un groupement alkyle; A représente un atome d'oxygène ou —NH—; et Y représente —CH=$CH_2$ ou —$CH_2CH_2Z$ (Z représentant un atome d'halogène, —$OSO_3H$ ou —$OPO_3H_2$.)

5. Composé selon la revendication 4, dans lequel $R_3$ est un atome d'hydrogène.

6. Composé selon la revendication 5, dans lequel $R_4$ est un atome d'hydrogène ou un groupement alkyle en $C_1$—$C_3$, 2-carboxyéthyle, 2-carbamoyléthyle ou 2-hydroxyéthyle.

7. Procédé pour la préparation d'un composé mono-azoïque représenté par un acide libre de formule (I)

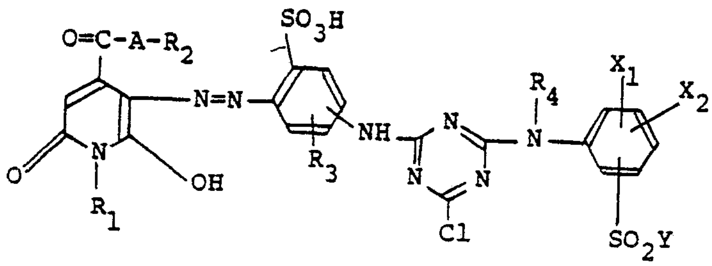

(I)

dans laquelle $R_1$ et $R_2$ représentent, indépendamment l'un de l'autre, un atome d'hydrogène ou un groupement alkyle, aralkyle ou cyclohexyle; $R_3$ représente un atome d'hydrogène ou un groupement méthyle ou acide sulfonique; $R_4$ représente un atome d'hydrogène ou un groupement alkyle; A représente un atome d'oxygène ou —NH—; $X_1$ et $X_2$ représentent, indépendamment l'un de l'autre, un atome d'hydrogène ou de chlore ou un groupement méthyle, méthoxy, carboxyle ou acide sulfonque; et Y représente —CH=$CH_2$ ou —$CH_2CH_2Z$ (Z représentant un atome d'halogène, —$OSO_3H$ ou —$OPO_3H_2$), comprenant les opérations consistant (1) à condenser une diamine aromatique représentée par la formule (II)

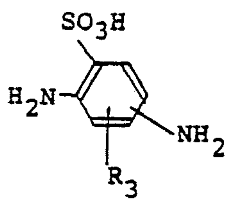

(II)

dans laquelle $R_3$ est tel que défini ci-dessus, une amine aromatique représentée par la formule (III)

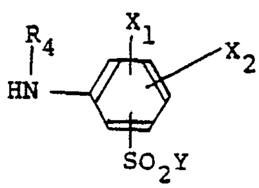

(III)

dans laquelle $R_4$, $X_1$, $X_2$ et Y sont tels que définis ci-dessus, avec le chlorure cyanurique pour obtenir une amine représentée par la formule (IV)

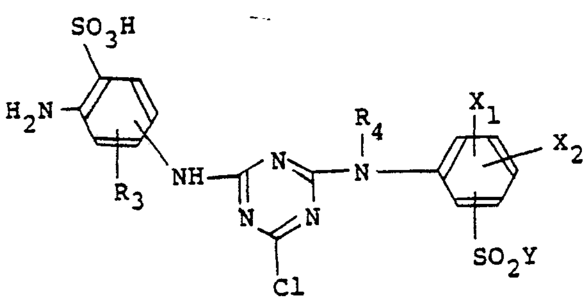

(IV)

dans laquelle $R_3$, $R_4$, $X_1$, $X_2$ et Y sont tels que définis ci-desuss, à diazoter l'amine (IV) ainsi obtenue et à coupler le produit diazoté avec une pyridone représentée par la formule générale (V)

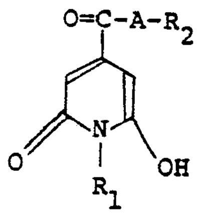

(V)

dans laquelle $R_1$, $R_2$ et A sont tels que définis ci-dessus, ou (2) à condenser la diamine aromatique représentée par la formule (II) avec le chlorure cyanurique, à diazoter le produit de condensation, à copuler le produit diazoté avec la pyridone représentée par la formule (V), pour obtenir une pyridone monoazoïque représentée par la formule (VI)

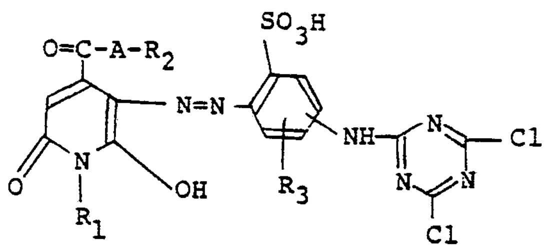

(VI)

dans laquelle $R_1$, $R_2$, $R_3$ et A sont tels que définis ci-dessus, puis à condenser le composé mono-azoïque (VI) avec l'amine aromatique représentée par la formule (III).

8. Procédé de teinture de fibres celllosiques, consistant à utiliser un composé mono-azoïque représenté par un acide libre de formule

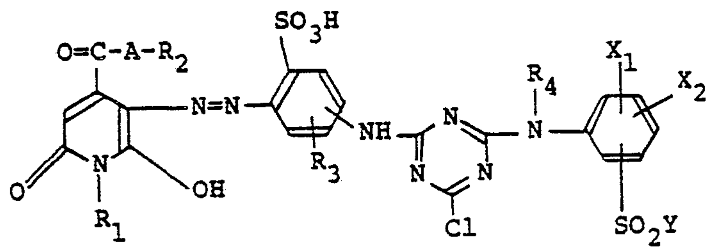

dans laquelle $R_1$ et $R_2$ représentent, indépendamment l'un de l'autre, un atome d'hydrogène ou un groupement alkyle, aralkyle ou cyclohexyle; $R_3$ représente un atome d'hydrogène ou un groupement méthyle ou acide sulfonique; $R_4$ représente un atome d'hydrogène ou un groupement alkyle; A représente un atome d'oxygène ou —NH—; $X_1$ et $X_2$ représentent, indépendamment l'un de l'autre, un atome d'hydrogène ou de chlore ou un groupement méthyle, méthoxy, carboxyle ou acide sulfonique; et Y représente $—CH=CH_2$ ou $—CH_2CH_2Z$ (Z représentant un atome d'halogène, $—OSO_3H$ ou $—OPO_3H_2$).